# FASCICULE DE BREVET EUROPEEN

(11) **EP 2 699 435 B1**
(45) Date de publication et mention de la délivrance du brevet: **22.04.2015**
(21) Numéro de dépôt: 12717335.9
(22) Date de dépôt: 29.03.2012
(51) Int. Cl.: B60J 3/02

(54) **DISPOSITIF COULISSANT, NOTAMMENT POUR PARE-SOLEIL DE VEHICULE, ET PARE-SOLEIL EQUIPE D'UN TEL DISPOSITIF**
GLEITVORRICHTUNG, INSBESONDERE FÜR EINE FAHRZEUGSONNENBLENDE, UND SONNENBLENDE MIT EINER SOLCHEN VORRICHTUNG
SLIDING DEVICE, IN PARTICULAR FOR A VEHICLE SUN VISOR, AND SUN VISOR WITH SUCH A DEVICE

(30) Priorité: 21.04.2011 FR 1153464
(43) Date de publication de la demande: 26.02.2014
(73) Titulaire: Mertz, Patrick, 68600 Neuf-Brisach (FR)
(72) Inventeur: Mertz, Patrick, 68600 Neuf-Brisach (FR)
(74) Mandataire: Koelbel, Caroline
(86) Numéro de dépôt international: PCT/FR2012/000112
(87) Numéro de publication internationale: WO 2012/143622

(56) Documents cités:
- EP-A1- 2 145 789
- EP-A2- 0 881 110
- DE-C1- 4 104 032

## Description

### Domaine technique :

La présente invention concerne un dispositif coulissant, notamment pour pare-soleil de véhicule, agencé pour pivoter autour d'une tige destinée à être reliée à un élément fixe tel que notamment l'habitacle dudit véhicule, ledit dispositif coulissant comportant un chariot de coulissement pourvu d'un passage agencé pour recevoir ladite tige, ledit chariot de coulissement étant monté coulissant à l'intérieur d'un profilé tubulaire contre lequel il est assujetti par au moins un organe de rappel.

L'invention concerne également un pare-soleil, notamment pour véhicule, agencé pour pivoter autour et coulisser le long d'une tige destinée à être reliée à un élément fixe tel que notamment l'habitacle dudit véhicule.

### Technique antérieure :

Un tel dispositif coulissant est d'ores et déjà connu et couramment employé pour équiper notamment les pare-soleils de certains véhicules haut de gamme. Il a pour avantage d'augmenter les possibilités d'orientation et de réglage de tels pare-soleils, dont il autorise non seulement le pivotement mais également le déplacement axial.

Il est connu de l'homme du métier qu'un tel dispositif coulissant comporte des inconvénients liés au jeu mécanique qui subsiste inévitablement entre le chariot de coulissement et le profilé tubulaire. En effet, celui-ci est source de vibrations et de nuisances sonores peu conformes au niveau de qualité communément attendu pour un véhicule haut de gamme et pouvant également se révéler très gênantes pour le conducteur.

Le document EP 0 881 110, qui a pour objet un pare-soleil de véhicule automobile équipé d'un tel dispositif coulissant, apporte à ce problème une solution consistant à fabriquer le chariot de coulissement en polyoxyméthylène enrichi en molybdène permettant d'améliorer son coefficient de glissement, et à répartir à sa surface des éléments d'appui agencés pour assurer un contact entre le chariot de coulissement et la paroi interne du profilé tubulaire. Néanmoins, une telle solution ne donne toujours pas entière satisfaction. En effet, elle est contraignante du point de vue du procédé de fabrication qui nécessite une étape d'étuvage des pièces à une température d'au moins 90°C pendant deux heures suivie d'une étape de refroidissement pour obtenir un parfait ajustement entre le chariot de coulissement et le profilé tubulaire, classiquement réalisé en aluminium. D'autre part, il a pu être observé que les éléments d'appui, qui n'offrent qu'une faible surface de contact, subissent une usure rapide conduisant inévitablement au rétablissement du jeu mécanique entre le chariot de coulissement et le corps tubulaire et par conséquent à la réapparition des vibrations et nuisances sonores.

### Exposé de l'invention:

La présente invention vise à apporter une solution aux problèmes évoqués ci-dessus en proposant un dispositif coulissant facile à fabriquer et comportant des moyens permettant de compenser le jeu mécanique observé entre le chariot de coulissement et le profilé tubulaire après leur assemblage, et par conséquent de réduire voire supprimer toutes vibrations et nuisances sonores engendrées par un tel jeu mécanique, par des moyens inusables dans le temps ou autocompensables.

Dans ce but, l'invention concerne un dispositif coulissant du genre indiqué en préambule, caractérisé en ce que ledit chariot de coulissement et ledit profilé tubulaire comportent respectivement des moyens d'emboîtement complémentaires mâles et femelles de section sensiblement triangulaire, lesdits moyens d'emboîtement femelles définissant au moins deux plans d'appui du chariot de coulissement sur ledit profilé tubulaire dans la direction de la force de rappel dudit organe de rappel, lesdits plans d'appui étant symétriques et inclinés d'un angle α par rapport au plan de symétrie longitudinal dudit dispositif coulissant.

Conformément à une variante de réalisation préférentielle du dispositif selon l'invention, lesdits moyens d'emboîtement mâles et femelles comportent respectivement au moins une paire de nervures longitudinales, s'étendant chacune extérieurement le long d'une paroi latérale dudit chariot de coulissement, et au moins une paire de rainures longitudinales s'étendant chacune intérieurement le long d'une paroi latérale du profilé tubulaire, lesdites nervures longitudinales et lesdites rainures longitudinales étant symétriques entre elles par rapport au plan de symétrie longitudinal dudit dispositif coulissant.

Afin d'assurer le centrage du chariot de coulissement et éviter son inclinaison par rapport à l'axe du dispositif coulissant, lors de son déplacement par rapport au profilé tubulaire, l'invention prévoit de préférence que lesdits moyens d'emboîtement mâles et femelles comportent respectivement deux paires de nervures longitudinales et deux paires de rainures longitudinales, lesdites paires étant réparties sur la hauteur des parois latérales dudit chariot de coulissement et dudit profilé tubulaire.

Selon une caractéristique additionnelle, lesdites rainures longitudinales et nervures longitudinales comportent chacune au moins une paroi inclinée définissant au moins un plan d'appui, ladite paroi inclinée formant avec ledit plan de symétrie longitudinal ledit angle α. Dans ce cas, ledit angle α est sensiblement compris entre 20° et 45°; et de préférence sensiblement égal à 30°.

Les moyens d'emboîtement mâles et femelles sont avantageusement agencés pour ménager un jeu périphérique entre ledit chariot de coulissement et ledit profilé tubulaire facilitant leur déplacement relatif.

Selon une autre caractéristique avantageuse du présent dispositif coulissant, ledit chariot de coulissement et/ou ledit profilé tubulaire comportent des moyens de glissement agencés pour faciliter leur déplacement l'un par rapport à l'autre, tels que par exemple au moins un patin formant le fond dudit chariot de coulissement ou disposé sous le fond dudit chariot de coulissement.

En variante de réalisation, le chariot de coulissement peut comporter, sur au moins une partie de ses nervures longitudinales, au moins une zone de surépaisseur venant en appui contre les nervures longitudinales du profilé tubulaire, ladite zone de surépaisseur étant de préférence localisée dans la partie médiane des parois latérales du chariot de coulissement.

Par ailleurs, l'invention a également pour objet un pare-soleil, notamment pour véhicule, agencé pour pivoter autour et coulisser le long d'une tige destinée à être reliée à un élément fixe tel que notamment l'habitacle dudit véhicule, ledit pare-soleil comportant un dispositif coulissant tel que précédemment décrit.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente une vue de face d'un pare-soleil équipé d'un dispositif coulissant selon l'invention,
- les figures 2 et 3 sont des vues en perspective respectivement du chariot de coulissement et du profilé tubulaire que comporte le dispositif coulissant selon l'invention,
- la figure 4 est une vue en coupe axiale d'un dispositif coulissant selon l'invention, et
- la figure 5 est une section agrandie du dispositif coulissant de la figure 4.

### Illustrations de l'invention et meilleure manière de la réaliser :

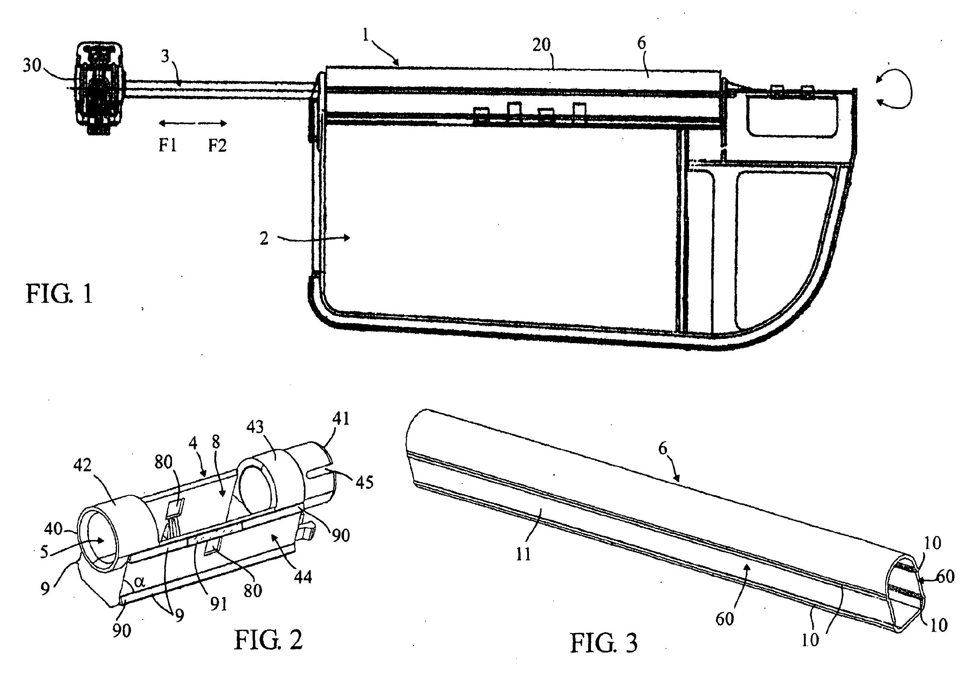

En référence aux figures, l'invention a pour objet un dispositif coulissant 1, notamment pour pare-soleil 2 de véhicule, agencé pour permettre un pivotement dudit pare-soleil 2 par rapport à une tige 3 reliée à l'habitacle dudit véhicule au moyen d'un élément de fixation 30. Ce dispositif coulissant 1 permet en plus un coulissement (cf. figure 1, flèches F1, F2) dudit pare-soleil 2, le long de ladite tige 3, entre une position rétractée dans laquelle il est disposé à proximité de l'élément de fixation 30 et une position déployée dans laquelle il est écarté de ce dernier.

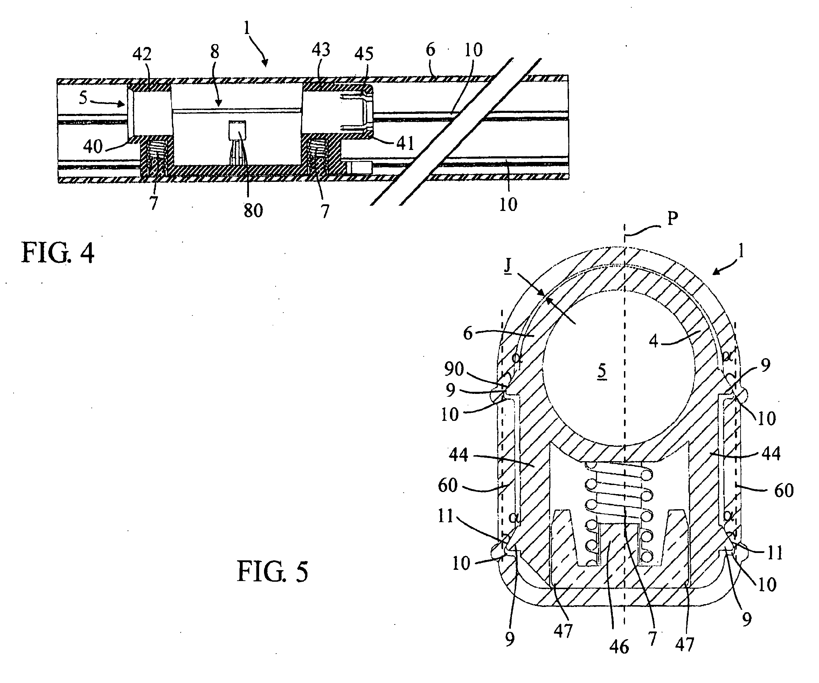

Tel qu'illustré aux figures 2 à 5, un tel dispositif coulissant 1 comporte, de manière classique, un chariot de coulissement 4, couramment fabriqué en matière plastique, monté coulissant à l'intérieur d'un profilé tubulaire 6 en métal, tel que de l'aluminium, contre lequel il est assujetti, dans l'exemple illustré, par deux ressorts de compression 7. Bien entendu, les matériaux employés pour fabriquer le chariot de coulissement 4 et le profilé tubulaire 6 ainsi que le nombre et la nature des ressorts 7 ne sont donnés qu'à titre d'exemples et pourraient être différents sans pour autant s'éloigner du cadre de l'invention. Tel que représenté à la figure 1, le profilé tubulaire 6 est, de manière classique, intégré à un bord longitudinal 20 du pare-soleil 2 et est revêtu de l'habillage externe de ce dernier.

En référence à la figure 2, le chariot de coulissement 4 est pourvu, à ses deux extrémités 40, 41, de deux portions tubulaires 42, 43 définissant un passage 5 agencé pour recevoir la tige 3. Le passage 5 communique avec un logement 8 agencé pour recevoir une cage à ressort (non représentée) accueillant au moins un ressort (non représenté) destiné à assujettir la tige 3 contre le passage 5 de manière à l'y stabiliser. Dans l'exemple illustré, le logement 8 comporte deux orifices 80 formés sur chacune des parois latérales 44 du chariot de coulissement 4 et destinés à coopérer avec des éléments de forme complémentaire, tels que par exemple des ergots, formés sur ladite cage à ressort pour bloquer celle-ci en position à l'intérieur dudit logement 8. D'autre part, la portion tubulaire 43 du passage 5 est pourvue d'une pluralité de fentes 45 contribuant à l'assemblage entre le chariot de coulissement 4 et la tige 3.

Conformément à l'invention, le chariot de coulissement 4 et le profilé tubulaire 6 comportent respectivement des moyens d'emboîtement complémentaires mâles et femelles. Dans l'exemple illustré, ces derniers sont respectivement définis par deux paires de nervures longitudinales 9 à section triangulaire s'étendant chacune extérieurement le long d'une paroi latérale 44 du chariot de coulissement 4, et deux paires de rainures longitudinales 10 à section triangulaire, s'étendant chacune intérieurement le long d'une paroi latérale 60 du profilé tubulaire 6. Lesdites nervures longitudinales 9 et lesdites rainures longitudinales 10 sont symétriques entre elles par rapport au plan de symétrie longitudinal P du dispositif coulissant 1, et sont réparties sur la hauteur des parois latérales 44, 60 du chariot de coulissement 4 et du profilé tubulaire 6. Par ailleurs, les rainures longitudinales 10 et nervures longitudinales 9 comportent chacune au moins une paroi 11, 90 inclinée d'un angle α par rapport au plan de symétrie longitudinal P du dispositif coulissant 1. Dans l'exemple illustré, l'angle α est sensiblement égal à 30°, néanmoins, toute autre valeur sensiblement comprise entre 20° et 45° conviendrait également. Les parois inclinées 11 des deux paires de rainures longitudinales 10 définissent ainsi avantageusement quatre plans d'appui inclinés, symétriques deux à deux par rapport au plan de symétrie longitudinal P du dispositif coulissant 1, du chariot de coulissement 4 sur le profilé tubulaire 6 dans la direction de la force de rappel des ressorts 7. Bien entendu, le nombre de nervures et rainures longitudinales 9, 10 pourrait être augmenté ou réduit si nécessaire, notamment en fonction des dimensions du chariot de coulissement 4 et du profilé tubulaire 6.

En complément et pour réduire encore le jeu de fonctionnement du dispositif coulissant 1, le chariot de coulissement 4 peut comporter, sur au moins une partie de ses nervures longitudinales 9, une ou plusieurs zones de surépaisseur 91 venant en appui contre les nervures longitudinales 10 du profilé tubulaire 6. Ces zones de surépaisseur 91 sont de préférence localisées dans la partie la plus souple des parois latérales 44 du chariot de coulissement 4, à savoir la partie médiane des nervures longitudinales 9 situées en partie haute du chariot de coulissement 4, pour obtenir un effet ressort ou amortisseur et favoriser le rattrapage de jeu éventuel.

La configuration de base du dispositif coulissant 1, complétée ou non par les zones de surépaisseur 91, permet avantageusement de compenser tout éventuel jeu mécanique en assurant un parfait guidage et un parfait centrage du chariot de coulissement 4 à l'intérieur du profilé tubulaire 6, tout au long du déplacement relatif de ces deux pièces, lors du coulissement du pare-soleil 2 entre ses positions rétractée et déployée, et inversement. En outre, la présence des différents plans d'appui inclinés garantit la conservation de la position axiale du chariot de coulissement 4 par rapport au profilé tubulaire 6 au fil des manoeuvres successives du pare-soleil 2. Toute rotation intempestive du chariot de coulissement 4 par rapport au profilé tubulaire 6, qui pourrait conduire à une usure des pièces, par conséquent à une dégradation de leur cohésion et à une apparition d'un jeu mécanique, est notamment prévenue. Enfin, les nervures longitudinales 9 contribuent à rigidifier le chariot de coulissement 4 et donc à en améliorer sa solidité mécanique. De plus, cette configuration permet de ménager un jeu périphérique J entre le chariot de coulissement 4 et le profilé tubulaire 6 garantissant un déplacement relatif entre ces deux pièces avec une force manoeuvre maîtrisée et constante, même en cas de présence d'éventuelles aspérités résiduelles ou imperfections de surface entre ces deux pièces qui n'ont de ce fait aucun impact sur la manoeuvre dudit dispositif.

Selon une caractéristique additionnelle de l'invention et dans l'exemple illustré, les ressorts 7 du chariot de coulissement 4 sont tenus chacun par un patin 46, réalisé par exemple en matériau plastique, dont les arêtes 47 sont avantageusement arrondies pour faciliter le coulissement du profilé tubulaire 6 par rapport au chariot de coulissement 4.

Bien entendu, de tels patins 46 pourraient être remplacés par d'autres moyens de glissement équivalents, reliés le cas échéant au chariot de coulissement 4 et/ou au profilé tubulaire 6. Une pluralité de patins, par exemple en forme de plots disposés sous le fond dudit chariot de coulissement 4 pourraient notamment être envisagés.

D'autre part, le chariot de coulissement 4 et le corps tubulaire 6 comportent encore, de manière classique, des moyens de limitation de la course du coulissement effectué l'un par rapport à l'autre, tel que notamment une butée de fin de course (non représentée).

### Possibilités d'application industrielle :

Il ressort clairement de cette description que l'invention permet d'atteindre les buts fixés, à savoir proposer un dispositif coulissant 1 facile à fabriquer et comportant des moyens permettant de rattraper les tolérances de fabrication entre le chariot coulissant 4 et le profilé tubulaire 6 pour compenser tout jeu mécanique créé entre ces pièces. En effet, la présence des moyens d'emboîtement complémentaires mâles et femelles définissant des plans d'appui inclinés, permet de réduire voire supprimer le jeu mécanique évitant ainsi toutes vibrations et nuisances sonores.

D'autre part, contrairement aux solutions existantes qui prévoient de munir le chariot de coulissement de points d'appui sujets à une usure rapide, les moyens d'emboîtement selon l'invention définissent des plans d'appui s'étendant sur toute la longueur de chacune des pièces, quasiment inusables, ce qui permet d'éviter l'apparition desdites vibrations et nuisances sonores dans le temps.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif coulissant (1), notamment pour pare-soleil (2) de véhicule, agencé pour pivoter autour d'une tige (3) destinée à être reliée à un élément fixe tel que notamment l'habitacle dudit véhicule, ledit dispositif coulissant (1) comportant un chariot de coulissement (4) pourvu d'un passage (5) agencé pour recevoir ladite tige (3), ledit chariot de coulissement (4) étant monté coulissant à l'intérieur d'un profilé tubulaire (6) contre lequel il est assujetti par au moins un organe de rappel (7), **caractérisé en ce que** ledit chariot de coulissement (4) et ledit profilé tubulaire (6) comportent respectivement des moyens d'emboîtement complémentaires mâles et femelles de section sensiblement triangulaire, lesdits moyens d'emboîtement femelles définissant au moins deux plans d'appui du chariot de coulissement (4) sur ledit profilé tubulaire (6) dans la direction de la force de rappel dudit organe de rappel (7), lesdits plans d'appui étant symétriques et inclinés d'un angle α par rapport au plan de symétrie longitudinal (P) dudit dispositif coulissant (1).

2. Dispositif coulissant (1) selon la revendication 1, **caractérisé en ce que** lesdits moyens d'emboîtement mâles et femelles comportent respectivement au moins une paire de nervures longitudinales (9), s'étendant chacune extérieurement le long d'une paroi latérale (44) dudit chariot de coulissement (4), et au moins une paire de rainures longitudinales (10) s'étendant chacune intérieurement le long d'une paroi latérale (60) du profilé tubulaire (6), lesdites nervures longitudinales (9) et lesdites rainures longitudinales (10) étant symétriques entre elles par rapport au plan de symétrie longitudinal (P) dudit dispositif coulissant (1).

3. Dispositif coulissant (1) selon la revendication 2, **caractérisé en ce que** lesdits moyens d'emboîtement mâles et femelles comportent respectivement deux paires de nervures longitudinales (9) et deux paires de rainures longitudinales (10), lesdites paires étant réparties sur la hauteur des parois latérales (44, 60) dudit chariot de coulissement (4) et dudit profilé tubulaire (6).

4. Dispositif coulissant (1) selon l'une quelconque des revendications 2 ou 3, **caractérisé en ce que** lesdites rainures longitudinales (10) et nervures longitudinales (9) comportent chacune au moins une paroi inclinée (11, 90) définissant au moins un plan d'appui, ladite paroi inclinée (11, 90) formant avec ledit plan de symétrie longitudinal (P) ledit angle α.

5. Dispositif coulissant (1) selon la revendication 4, **caractérisé en ce que** ledit angle α est sensiblement compris entre 20° et 45°.

6. Dispositif coulissant (1) selon la revendication 5, **caractérisé en ce que** ledit angle α est sensiblement égal à 30°.

7. Dispositif coulissant (1) selon l'une quelconque des revendications précédentes, **caractérisé en ce que** ledit chariot de coulissement (4) et/ou ledit profilé tubulaire (6) comportent des moyens de glissement agencés pour faciliter leur déplacement l'un par rapport à l'autre.

8. Dispositif coulissant (1) selon la revendication 7, **caractérisé en ce que** lesdits moyens de glissement comportent au moins un patin (46) formant le fond dudit chariot de coulissement (4) ou disposé sous ledit fond dudit chariot de coulissement (4).

9. Dispositif coulissant (1) selon la revendication 1, **caractérisé en ce que** lesdits moyens d'emboîtement mâles et femelles sont agencés pour ménager un jeu périphérique (J) entre ledit chariot de coulissement (4) et ledit profilé tubulaire (6).

10. Dispositif coulissant (1) selon l'une quelconque des revendications 2 ou 3, **caractérisé en ce que** le chariot de coulissement (4) comporte, sur au moins une partie de ses nervures longitudinales (9), au moins une zone de surépaisseur (91) venant en appui contre les nervures longitudinales (10) du profilé tubulaire (6).

11. Dispositif coulissant (1) selon la revendication 10, **caractérisé en ce que** ladite zone de surépaisseur (91) est localisée dans la partie médiane des parois latérales (44) du chariot de coulissement (4).

12. Pare-soleil (2), notamment pour véhicule, agencé pour pivoter autour et coulisser le long d'une tige (3) destinée à être reliée à un élément fixe tel que notamment l'habitacle dudit véhicule, **caractérisé en ce qu'**il comporte un dispositif coulissant (1) selon l'une quelconque des revendications 1 à 11.

## Patentansprüche

1. Gleitvorrichtung (1), insbesondere für eine Fahrzeugsonnenblende (2), ausgelegt, um um eine Stange (3) zu drehen, die dazu bestimmt ist, mit einem festen Element wie insbesondere der Innenraum des besagten Fahrzeugs verbunden zu werden, wobei besagte Gleitvorrichtung (1) einen Gleitschlitten (4) beträgt, der einen Durchgang (5) aufweist, der ausgelegt ist, um besagte Stange (3) aufzunehmen, wobei besagter Gleitschlitten (4) gleitend in ein Rohrprofil (6) montiert ist, gegen welches er durch mindestens ein Rückstellelement (7) beaufschlagt ist, **dadurch gekennzeichnet, dass** besagter Gleitschlitten (4) und besagtes Rohrprofil (6) komplementäre männliche bzw. weibliche Einfügemittel mit einem merklich dreieckigen Querschnitt betragen, wobei besagte weibliche Einfügemittel in der Richtung der Rückstellkraft des besagten Rückstellelementes (7) zumindest zwei Auflageebenen für den Gleitschlitten (4) auf besagtem Rohrprofil (6) bilden, wobei besagte Auflageebenen symmetrisch und um einen Winkel α in Bezug auf die Längssymmetrieebene (P) der besagten Gleitvorrichtung (1) geneigt sind.

2. Gleitvorrichtung (1) nach Anspruch 1, **dadurch gekennzeichnet, dass** besagte männliche und weibliche Einfügemittel zumindest ein Paar Längsrippen (9), die sich jeweils außen entlang einer Seitenwand (44) von besagtem Gleitschlitten (4) erstrecken, bzw. zumindest ein Paar Längsrillen (10), die sich jeweils innen entlang einer Seitenwand (60) des Rohrprofils (6) erstrecken, betragen, wobei besagte Längsrippen (9) und besagte Längsrillen (10) untereinander in Bezug auf die Längssymmetrieebene (P) der besagten Gleitvorrichtung (1) symmetrisch sind.

3. Gleitvorrichtung (1) nach Anspruch 2, **dadurch gekennzeichnet, dass** besagte männliche und weibliche Einfügemittel zwei Paar Längsrippen (9) bzw. zwei Paar Längsrillen (10) betragen, wobei beide Paare auf der Höhe der Seitenwände (44, 60) von besagtem Gleitschlitten (4) und von besagtem Rohrprofil (6) verteilt sind.

4. Gleitvorrichtung (1) nach einem beliebigen der Ansprüche 2 oder 3, **dadurch gekennzeichnet, dass** besagte Längsrillen (10) und Längsrippen (9) jeweils zumindest eine geneigte Wand (11, 90) betragen, die zumindest eine Auflageebene definiert, wobei besagte geneigte Wand (11, 90) mit besagter Längssymmetrieebene (P) besagten Winkel α bildet.

5. Gleitvorrichtung (1) nach Anspruch 4, **dadurch gekennzeichnet, dass** besagter Winkel α im Wesentlichen zwischen 20° und 45° liegt.

6. Gleitvorrichtung (1) nach Anspruch 5, **dadurch gekennzeichnet, dass** besagter Winkel α im Wesentlichen gleich 30° ist.

7. Gleitvorrichtung (1) nach einem beliebigen der vorhergehenden Ansprüche, **dadurch gekennzeichnet, dass** besagter Gleitschlitten (4) und/oder besagtes Rohrprofil (6) Gleitmittel betragen, die ausgelegt sind, um ihre Bewegungen zueinander zu erleichtern.

8. Gleitvorrichtung (1) nach Anspruch 7, **dadurch gekennzeichnet, dass** besagte Gleitmittel zumindest einen Gleitschuh (46) betragen, der den Boden von besagtem Gleitschlitten (4) bildet oder unter besagtem Boden von besagtem Gleitschlitten (4) angeordnet ist.

9. Gleitvorrichtung (1) nach Anspruch 1, **dadurch gekennzeichnet, dass** besagte männliche und weibliche Einfügemittel ausgelegt sind, um ein Umfangsspiel (J) zwischen besagtem Gleitschlitten (4) und besagtem Rohrprofil (6) zu schaffen.

10. Gleitvorrichtung (1) nach einem beliebigen der Ansprüche 2 oder 3, **dadurch gekennzeichnet, dass** der Gleitschlitten (4) auf mindestens einem Teil seiner Längsrippen (9) mindestens einen Bereich (91) mit einer Überdicke beträgt, die auf den Längsrillen (10) des Rohrprofils (6) aufliegt.

11. Gleitvorrichtung (1) nach Anspruch 10, **dadurch gekennzeichnet, dass** besagter Bereich (91) mit einer Überdicke in dem mittleren Teil der Seitenwände (44) des Gleitschlittens (4) angeordnet ist.

12. Sonnenblende (2), insbesondere für ein Fahrzeug, ausgelegt, um um eine Stange (3) zu drehen und entlang dieser zu gleiten, wobei diese Stange (3) dazu bestimmt ist, mit einem festen Element wie insbesondere der Innenraum des besagten Fahrzeugs verbunden zu werden, **dadurch gekennzeichnet, dass** sie eine Gleitvorrichtung (1) nach einem beliebigen der Ansprüche 1 bis 11 beträgt.

## Claims

1. Sliding device (1), in particular for vehicle sun visor (2), arranged so as to pivot about a rod (3) intended to be connected to a stationary element such as, in particular, the passenger compartment of said vehicle, said sliding device (1) comprising a sliding carriage (4) provided with an opening (5) arranged so as to house said rod (3), said sliding carriage (4) being slidably mounted inside a tubular profile member (6) against which it is pressed by at least one return member (7), **characterized in that** said sliding carriage (4) and said tubular profile member (6) comprise respectively complementary male and female fitting means with a substantially triangular cross-section, said female fitting means defining at least two bearing planes for sliding carriage (4) on said tubular profile member (6) in the direction of the return force of said return member (7), said bearing planes being symmetrical and inclined by an angle α with respect to the longitudinal plane of symmetry (P) of said sliding device (1).

2. Sliding device (1) according to claim 1, **characterized in that** said male and female fitting means comprise respectively at least one pair of longitudinal ribs (9) extending each externally along a side wall (44) of said sliding carriage (4) and at least one pair of longitudinal grooves (10) extending each internally along a side wall (60) of tubular profile member (6), said longitudinal ribs (9) and said longitudinal grooves (10) being symmetrical to each other with respect to the longitudinal plane of symmetry (P) of said sliding device (1).

3. Sliding device (1) according to claim 2, **characterized in that** said male and female fitting means comprise respectively two pairs of longitudinal ribs (9) and two pairs of longitudinal grooves (10), said pairs being distributed on the height of side walls (44, 60) of said sliding carriage (4) and of said tubular profile member (6).

4. Sliding device (1) according to any of claims 2 or 3, **characterized in that** said longitudinal grooves (10) and longitudinal ribs (9) comprise each at least one inclined wall (11, 90) that defines at least one bearing plane, said inclined wall (11, 90) forming with said longitudinal plane of symmetry (P) said angle α.

5. Sliding device (1) according to claim 4, **characterized in that** said angle α lies substantially between 20° and 45°.

6. Sliding device (1) according to claim 5, **characterized in that** said angle α is substantially equal to 30°.

7. Sliding device (1) according to any of the previous claims, **characterized in that** said sliding carriage (4) and/or said tubular profile member (6) comprise sliding means arranged so as to facilitate their displacement with respect to each other.

8. Sliding device (1) according to claim 7, **characterized in that** said sliding means comprise at least one shoe (46) forming the bottom of said sliding carriage (4) or arranged underneath the bottom of said sliding carriage (4).

9. Sliding device (1) according to claim 1, **characterized in that** said male and female fitting means are arranged to ensure a peripheral play (J) between said sliding carriage (4) and said tubular profile member (6).

10. Sliding device (1) according to any of claims 2 or 3, **characterized in that** the sliding carriage (4) comprises, on at least a section of its horizontal ribs (9), at least one area (91) with excess thickness bearing against the longitudinal grooves (10) of tubular profile member (6).

11. Sliding device (1) according to claim 10, **characterized in that** said area (91) with excess thickness is located in the median section of side walls (44) of sliding carriage (4).

12. Sun visor (2), in particular for vehicles, arranged so as to pivot about and slide along a rod (3) intended to be connected to a stationary element such as in particular the passenger compartment of said vehicle, **characterized in that** it comprises a sliding device (1) according to any of claims 1 to 11.
